(19) Europäisches Patentamt
European Patent Office
Office européen des brevets

(11) **EP 2 041 532 B1**

(12) **FASCICULE DE BREVET EUROPEEN**

(45) Date de publication et mention de la délivrance du brevet:
**18.06.2014 Bulletin 2014/25**

(21) Numéro de dépôt: **07823271.7**

(22) Date de dépôt: **10.07.2007**

(51) Int Cl.:
***G01G 19/44*** *(2006.01)*

(86) Numéro de dépôt international:
**PCT/FR2007/001178**

(87) Numéro de publication internationale:
**WO 2008/009794 (24.01.2008 Gazette 2008/04)**

(54) **APPAREIL ÉLECTRONIQUE DE PESÉE**

Elektronische Waage

ELECTRONIC WEIGHING SCALE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **18.07.2006 FR 0606509**

(43) Date de publication de la demande:
**01.04.2009 Bulletin 2009/14**

(73) Titulaire: **Seb S.A.**
**69130 Ecully (FR)**

(72) Inventeurs:
• **LINGLIN, Benoît**
**74350 Cruseilles (FR)**
• **BOIS, Etienne**
**74150 Rumilly (FR)**

(74) Mandataire: **Kiehl, Hubert**
**SEB Développement**
**Les 4 M-Chemin du Petit Bois**
**B.P. 172**
**69134 Ecully Cedex (FR)**

(56) Documents cités:
**EP-A2- 0 984 251     WO-A-91/09286**
**US-A- 5 510 581     US-A- 5 929 391**

EP 2 041 532 B1

## Description

La présente invention est relative à un appareil de pesée du genre pèse-personne, pèse-bébé ou balance de ménage, notamment du type électronique comportant des jauges d'extensométrie associées à un circuit électronique de mesure délivrant un signal qui est fonction du poids à mesurer et elle concerne plus particulièrement la structure d'un tel appareil.

Un appareil de pesée comprend en principe un plateau susceptible de recevoir la charge dont le poids est à mesurer, au moins un capteur comportant des jauges d'extensométrie disposées sur un corps d'épreuve, l'une des extrémités de ce corps étant reliée au plateau et l'autre à un socle ou à un pied destiné à reposer sur une surface plane. Les deux extrémités de ce corps d'épreuve sont encastrées au plateau et au socle et elles délimitent une barre en un matériau élastique supportant les jauges de contrainte et déformable essentiellement par flexion sous l'effet de la charge appliquée. Les jauges de contrainte sont reliées à un circuit électronique apte à convertir les déformations subies par les jauges en signaux électriques et transformer ces derniers en valeurs numériques correspondant au poids mesuré affiché ensuite à l'écran de l'appareil.

Un tel appareil est décrit dans le document WO 91/09286 où le pèse-personne comporte quatre capteurs plats comportant une base de fixation au socle de l'appareil, la base étant reliée par un barreau supportant les jauges de contrainte à une partie d'application de charge en provenance du plateau. La base du capteur est fixée par des vis aux quatre coins d'un socle rectangulaire, la partie d'application de charge recevant la charge appliquée par le plateau au niveau de deux points d'application situés de part et d'autre de l'axe médian du barreau. Ce document décrit, certes un plateau de pèse-personne plus économique, car reposant sur quatre capteurs indépendants, mais reliés électriquement ensemble pour mesurer la charge appliquée. Toutefois, leurs fixations au socle et au plateau sont rigides, ce qui rend les capteurs dépendants par le plateau et engendre des problèmes métrologiques. De surcroît, une telle fixation à plusieurs vis ou rivets par capteur complique l'opération d'assemblage et la rend plus coûteuse.

Le document US 5 929 391 décrit un autre exemple de pèse-personne à quatre capteurs supportant le plateau, mais où la charge est appliquée à chaque capteur par une structure de pied correspondante. Plus particulièrement, chaque structure de pied comporte un boîtier renfermant une interface rigide, des écarteurs, le capteur et un sous-ensemble d'application de force en provenance du pied. Le pied prend appui sur une, voire deux, protubérances du capteur par l'intermédiaire dudit sous-ensemble comportant une pièce métallique protubérante au milieu d'un ressort. Une telle structure, certes, ayant des appuis plus souples, donne de meilleurs résultats métrologiques que celle du document précédent, mais au prix d'un assemblage de nombreux composants et, de ce fait, sa structure est complexe et de réalisation coûteuse, le montage de tous ces composants se prêtant difficilement à une automatisation.

Il en est de même pour l'appareil décrit dans le document EP 0 984 251 où le capteur est du type diaphragme à bossage et la charge est appliquée au centre du diaphragme moyennant une tige flottante à pointe conique prenant appui dans une cavité du diaphragme. Pour ce qui est du montage dans l'appareil, le diaphragme est pris en sandwich entre un boîtier et la tige d'application de charge en étant supporté par un élément élastique à plusieurs bras spiralés prenant appui sur le pied. Cette construction fait appel à de nombreuses pièces de structure complexe et nécessitant un assemblage compliqué et coûteux.

Une autre solution a été décrite dans le document US 5 510 581 où le pèse-personne comporte des capteurs de poids plats fixés par vis à une plaque supérieure, le pied comportant une protubérance qui vient s'introduire dans un orifice du capteur. De construction simplifiée par rapport aux précédents appareils, la fixation des capteurs fait toujours appel ici à des vis de fixation et nécessite, par conséquent, l'utilisation d'un capteur avec des orifices correspondants, donc plus cher. De ce fait, la fixation du capteur entre les deux plaques, supérieure et inférieure de l'appareil, reste assez rigide et ne permet pas de transmettre intégralement la charge au capteur.

Le but de l'invention est de proposer un appareil électronique de pesée de structure et montage simplifiés, facile à industrialiser, pour un faible coût, tout en étant fiable en fonctionnement.

Un autre but de l'invention est de proposer un appareil électronique de pesée à multipoints d'appui, intégrant des capteurs de poids de construction simplifiée et économiques, tout en étant aptes à réaliser des mesures précises.

Un autre but de l'invention est un appareil électronique de pesée ayant un nombre réduit de composants, en étant plus économiques à fabriquer et à assembler, tout en offrant les caractéristiques métrologiques requises.

Ces buts sont atteints avec un appareil électronique de pesée comportant un plateau de réception de charge et un socle, ainsi qu'au moins trois capteurs de force essentiellement plats, supportant le plateau et comportant des jauges de contrainte pour générer un signal électrique correspondant à la charge appliquée, les capteurs étant directement montés entre le plateau et le socle, le plateau et/ou le socle intégrant des moyens d'orientation des capteurs, du fait qu'il comprend, en dessous de chaque capteur, une lame comportant une attache la reliant au socle et une extrémité libre portant une protubérance d'application de charge au capteur ainsi qu'un bossage destiné à prendre appui sur le sol.

L'appareil comporte donc au moins trois capteurs de force essentiellement plats et indépendants, chaque capteur délivrant un signal correspondant à un pourcentage du poids mesuré. Un tel appareil à plusieurs capteurs, dit à multipoints d'appui, peut déjà être fabriqué de manière plus économique, en utilisant moins de matière que pour un appareil équivalent à capteur unique. Par capteur essentiellement plat, on comprend un capteur qui est réalisé à partir d'une plaque plane ou plate, même si des surépaisseurs, par exemple de l'ordre de quelques mm venaient à être réalisées par des opérations ultérieures de déformation de la matière de la plaque de base.

Selon un aspect avantageux de l'invention, ces capteurs sont montés directement entre le plateau et le socle, c'est-à-dire qu'ils viennent directement en contact avec le plateau et le socle, sans utiliser de pièces interposées, ce qui permet déjà de réduire le nombre de pièces et d'en simplifier le montage. Pour ceci, le plateau et/ou le socle comportent des moyens d'orientation de chaque capteur plan, parallèlement au plateau et au socle, tout en assurant simultanément une mise en place correcte du capteur par rapport au point d'application de la force.

Selon l'invention, le socle de l'appareil est réalisé de manière à ce qu'il comprenne, en dessous de chaque capteur, une lame comportant une attache la reliant au socle et une extrémité libre portant une protubérance d'application de charge au capteur ainsi qu'un bossage destiné à prendre appui sur le sol. Une telle lame ou languette est donc une pièce de forme allongée solidaire du socle, en étant reliée à l'une de ses extrémités au socle de l'appareil, socle qui est généralement une plaque plane ayant une même surface que le plateau de réception du poids à mesurer. L'extrémité opposée est une extrémité libre d'application de charge au capteur, cette extrémité étant libre pour pouvoir fléchir et s'adapter à la configuration du sol, ainsi qu'aux charges excentrées appliquées sur le plateau. Ceci permet de relier de manière souple chaque capteur au socle. Par ailleurs, de par sa possibilité de rotation autour de son point d'attache au socle, la lame assure un débattement assez important de son extrémité libre (formant donc zone d'application de charge et en même temps pied de l'appareil), autour du point d'articulation ou de fixation au socle de la lame, sans faire appel à des surépaisseurs importantes à l'intérieur de l'appareil, permettant de réaliser ainsi un appareil à profil encore plus mince.

Lorsque la charge est appliquée sur le plateau, la lame se déforme en flexion lorsqu'elle reçoit la réaction du sol au niveau de son extrémité libre, charge qu'elle transmet au corps d'épreuve, travaillant en flexion, du capteur. De par son matériau, sa forme et ses dimensions, la lame présente une certaine rigidité et peut générer une certaine erreur de mesure. Afin de limiter l'erreur de mesure générée par la lame, on choisit de manière appropriée le matériau, la forme et les dimensions de la lame en relation avec un capteur de force d'une géométrie donnée.

Selon l'invention également, l'extrémité libre de la lame comporte une protubérance d'application de la charge sur sa face située en vis-à-vis du capteur, la face opposée comportant un bossage prenant appui sur le sol. Par protubérance d'application de la charge, on comprend un relief orienté verticalement, en étant perpendiculaire à la surface interne de la lame qui est, elle, parallèle à celle du plateau ou du socle, et dont le sommet est soit ponctiforme, de préférence sphérique, conique ou cylindrique à faibles dimensions (de l'ordre de quelques mm) ou soit il forme une génératrice d'appui perpendiculaire au barreau des capteurs (formant par exemple une arrête linéaire ayant une même largeur que celle de la partie déformable du capteur). Ainsi, le capteur peut être correctement installé à l'intérieur de l'appareil, seulement en étant orienté par rapport à son contour externe. Un tel capteur peut alors avoir une forme simplifiée, comportant par exemple un barreau plat portant les jauges de contrainte, exempté d'orifices de fixation, en étant seulement tenu par son contour au plateau ou au socle. Compte tenu du fait que les jauges de contrainte sont disposées à des emplacements prédéterminés, choisis en fonction de la géométrie du capteur, la bonne orientation du capteur par rapport au plateau ou au socle permet de lui appliquer la charge en un endroit précis par rapport aux jauges. Du fait que, grâce à la protubérance d'application de la charge, la charge est concentrée et appliquée au capteur en une zone d'application (qui peut être une zone ponctuelle ou une ligne), zone qui est définie par l'orientation du capteur dans l'appareil, celui-ci peut fonctionner de manière précise, en transmettant toujours un signal proportionnel à la force, même pour une géométrie simplifiée du capteur.

Ainsi, le capteur pourrait être réduit à un simple barreau subissant une flexion, le barreau étant encastré à l'une des extrémités, l'autre extrémité recevant une charge verticale (le poids) de manière ponctuelle, en provenance de la protubérance portée par une lame dont l'extrémité libre est mobile, ce qui a pour effet de neutraliser les effets des éventuels moments parasites dus à une application excentrée du poids sur le plateau.

De préférence, le capteur a une forme générale en T, comportant au centre un barreau déformable portant les jauges de contrainte et la lame a une forme générale rectangulaire et est parallèle au barreau.

La lame et le barreau du capteur étant parallèles et travaillant en flexion, l'extrémité libre de lame peut fléchir, selon une même direction que le barreau et ils prennent, de préférence, une même forme. Ceci permet d'éviter l'apparition des moments de torsion dans le barreau (par exemple en plaçant la lame de manière à fléchir à 90° par rapport au barreau) qui sont difficilement maîtrisables. Par contre, les moments axiaux générés dans le barreau lorsque la lame en dessous est parallèle au barreau, peuvent être mieux gérés en choisissant un positionnement optimum des jauges de contrainte selon l'axe longitudinal du corps d'épreuve, à une abscisse adaptée.

Dans un premier mode de réalisation de l'invention, la lame est réalisée en une seule pièce avec le socle.

Ainsi, le socle peut avantageusement être réalisé en une matière plastique par une technique d'injection, ce qui permet d'obtenir les lames découpées aux extrémités du barreau par une seule opération. Ceci permet de réduire le coût des opérations de fabrication du socle, ainsi que d'assemblage de l'appareil.

Une telle lame découpée, tout en étant reliée par une attache au plateau ou au socle, permet plus de flexibilité dans l'application de la charge, ayant pour effet de rendre indépendants les capteurs, pour une meilleure hystérésis, un meilleur retour à zéro de l'appareil et une excellente linéarité du signal mesuré.

Dans un deuxième mode de réalisation de l'invention, la lame est rapportée sur la surface interne du socle.

Ceci permet de simplifier la forme et donc l'opération d'obtention du socle, les lames pouvant être réalisées par une opération à part et assemblées ensuite avec le socle, tout en permettant ainsi d'obtenir un ensemble socle facilement manipulable sur les lignes d'assemblage du pèse-personne par la suite.

Dans une première variante du deuxième mode de réalisation, la lame comporte une attache de fixation au socle et est reliée à l'extrémité libre par un soufflet.

En reliant l'extrémité d'attache de la lame à un soufflet, l'ensemble de lame ainsi obtenu assure encore plus de souplesse dans un sens (essentiellement vertical), tout en gardant la rigidité nécessaire dans les autres sens (par exemple dans un plan latéral) que celle obtenue à l'extrémité libre d'une lame dont la souplesse est définie uniquement par sa matière et ses dimensions, qui sont par ailleurs sujettes aux tolérances de fabrication. Cette construction permet de rendre encore plus indépendants les capteurs du socle, et d'obtenir des précisions plus élevées des valeurs mesurées pouvant alors s'appliquer à des balances de précision, par exemple des balances de ménage.

Dans une deuxième variante du deuxième mode de réalisation, la lame est montée pivotante autour de son attache au socle.

L'extrémité d'attache de la lame est alors montée rotative dans une articulation type charnière appartenant au socle, autour d'un axe de pivotement parallèle au plan du socle. Cette solution permet de palier à une insuffisance de souplesse verticale de la lame, par exemple due à son matériau ou à son processus de fabrication, tout en gardant la rigidité latérale et axiale, la lame étant poussée en direction du capteur par la force de réaction du sol qui la fait alors tourner autour de son articulation, ce qui permet de transmettre la force directement au capteur et confère ainsi plus de précision à la mesure de poids effectuée par l'appareil.

De préférence, ledit capteur a une forme générale en T, comportant au centre un barreau déformable portant les jauges de contrainte, la protubérance d'application de la charge prenant appui à l'extrémité libre du barreau.

Un tel capteur peut être réalisé facilement à partir d'une plaque plane de faible épaisseur en pratiquant, au centre, un découpage en U définissant un barreau au centre, les parties latérales servant de fixation. Le barreau est déformable et porte les jauges de contrainte. La partie entourant ie barreau permet, de par sa forme et ses dimensions, une bonne orientation du capteur par rapport à son logement à l'intérieur du plateau ou du socle, la protubérance d'application de charge prenant appui, elle, à l'extrémité libre du barreau. Un tel capteur dont le barreau central porte les jauges de contrainte et reçoit en même temps l'application de la charge, présente une géométrie simplifiée et, par conséquent des dimensions réduites, ce qui a pour effet une économie de matière importante.

Dans une variante avantageuse de l'invention, ledit capteur comprend un barreau central déformable, portant les jauges de contrainte, chacune de ses extrémités étant reliée à une pièce en U, les deux pièces en U d'extrémité se faisant face, la lame comportant deux protubérances prenant chacune appui sur l'un des bras d'une extrémité en U.

Le barreau de ce capteur se déforme en un double S symétrique lorsque sa première extrémité en U est au contact du plateau et la deuxième extrémité en U vient au contact des protubérances de la lame qui lui transmet ainsi la charge depuis le pied en direction du capteur. Un tel capteur assure un très bon signal et peut être utilisé dans des balances de précision.

Avantageusement, ledit barreau comprend une saillie à son extrémité libre coopérant avec la protubérance d'application de charge.

L'appareil peut fonctionner correctement même avec un barreau ne comprenant pas de saillie ou protubérance à son extrémité libre, la protubérance du socle, respectivement celle du plateau, permettant à elle seule d'appliquer la force de manière précise au capteur. On préfère toutefois réaliser une telle protubérance à l'extrémité libre du barreau, car elle permet d'appliquer la charge de manière encore plus précise et plus ponctuelle, tout en garantissant un bon fonctionnement de l'appareil au cours du temps, le capteur et donc sa protubérance étant réalisés en un matériau métallique, à faible usure dans le temps.

De préférence, le plateau et/ou le socle comportent des surépaisseurs prenant appui sur le pourtour du capteur

Ces surépaisseurs assurent le débattement en fléchissement du barreau soumis à la charge appliquée et donc un fonctionnement correct de l'appareil.

De préférence, les capteurs sont montés au plateau ou au socle en utilisant des moyens de fixation à enclenchement direct.

De tels moyens à fixation par simple pression (par exemple en utilisant des clips ou crochets d'encliquetage, etc.) assurent une fixation rapide du capteur par rapport à son logement dans le plateau ou le socle, réduisant ainsi le temps et le coût de montage de l'appareil.

De préférence, les capteurs, le circuit électronique de l'appareil et leurs câbles de connexion électrique sont reliés ensemble et forment un module de pesée directement monté entre le plateau et le socle.

Les composants du circuit électrique de l'appareil sont connectés ensemble avant leur montage dans l'appareil, ce qui a pour avantage la possibilité d'automatiser leur assemblage, les soudures au niveau des connexions électriques pouvant également être réalisées alors de manière automatisée. Ceci simplifie par la suite le montage de l'appareil, un tel module pouvant être mis en place lors d'une même manipulation de montage.

Avantageusement, ledit plateau et/ou ledit socle sont réalisés en une matière plastique par une technique d'injection.

Les formes complexes du plateau et/ou du socle sont ainsi réalisées, de manière économique par injection d'une matière plastique, telle par exemple l'ABS ou le PS.

Dans une première variante de réalisation de l'invention, le plateau comporte des nervures internes coopérant avec des contre nervures internes du socle pour rigidifier l'ensemble.

Ceci permet de réaliser un pèse-personne très peu coûteux, facile à assembler, par exemple par simple encliquetage du plateau et du socle, ceux-ci étant suffisamment rigides pour supporter sans se déformer le poids à mesurer.

Dans une deuxième variante de réalisation de l'invention, chaque capteur est fixé au socle moyennant un volet rabattable.

Un tel volet articulé sur le socle de l'appareil permet de renfermer le capteur dans son logement prévu à cet effet, le volet formant ensuite support pour une plaque de mesure ayant une rigidité adaptée au poids à mesurer. Tout en comportant les surépaisseurs nécessaires au bon fonctionnement du capteur, un tel volet présente donc des dimensions réduites, correspondant à celle du capteur et permettant de supporter, en sa partie supérieure, un plateau d'application de charge.

Dans une autre variante de réalisation de l'invention, le plateau est une plaque rigide d'application de charge.

Une telle plaque rigide d'application de charge comporte des surépaisseurs prenant appui sur le capteur et des moyens d'assemblage au socle de l'appareil.

L'invention sera mieux comprise à l'étude des modes de réalisation pris à titre nullement limitatif et illustrés dans les figures annexées dans lesquelles :

- la figure 1 est une vue en coupe schématique d'un capteur de force utilisé avec l'appareil de l'invention;
- la figure 2 est une vue en perspective d'un module de pesée;
- la figure 3a est une vue en perspective montrant le socle d'un appareil selon une première variante d'un premier mode de réalisation de l'invention, la figure 3b une vue en perspective du socle de la figure 3a avec les capteurs mis en place et la figure 3c est une vue similaire à celle de la figure 3b, après la fixation des capteurs

- la figure 4a est une vue éclatée montrant les principaux composants d'un appareil selon une deuxième variante du premier mode de réalisation de l'invention et la figure 4b une vue en coupe de l'appareil de la figure 4a, ses composants étant assemblés;
- la figure 5a est une vue éclatée montrant les principaux composants d'un appareil selon une troisième variante du premier mode de réalisation de l'invention et la figure 5b une vue en coupe de l'appareil de la figure 5a, ses composants étant assemblés ;
- la figure 6a est une vue en perspective d'un ensemble de lame selon une première variante d'un deuxième mode de réalisation de l'invention ; la figure 6b est une vue en coupe longitudinale d'un ensemble de lame de la figure 6a monté sur le socle de l'appareil et la figure 6c est une vue similaire à celle de la figure 6b, mais où l'ensemble lame est représenté au contact d'un capteur ;
- la figure 7a est une vue en perspective d'un ensemble de lame selon une deuxième variante d'un deuxième mode de réalisation de l'invention ; la figure 7b est une vue en coupe longitudinale d'un ensemble de lame de la figure 7a monté sur le socle de l'appareil et la figure 7c est une vue similaire à celle de la figure 7b, mais où l'ensemble lame est représenté au contact d'un capteur ;
- la figure 8 est une vue éclatée d'un appareil de pesée selon la première variante du deuxième mode de réalisation de l'invention, le plateau étant exclu pour plus de clarté ;
- la figure 9 est une vue éclatée d'un appareil de pesée selon la deuxième variante du deuxième mode de réalisation de l'invention, le plateau étant exclu pour plus de clarté ;
- la figure 10 est une vue en perspective de l'appareil de la figure 8, les composants étant assemblés sur le socle;
- la figure 11 est une vue en perspective de l'appareil de la figure 9, les composants étant assemblés sur le socle.

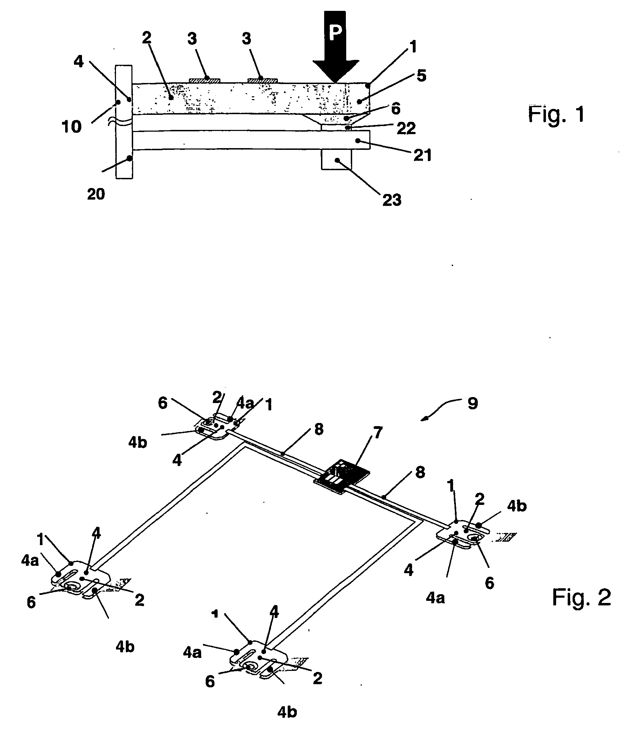

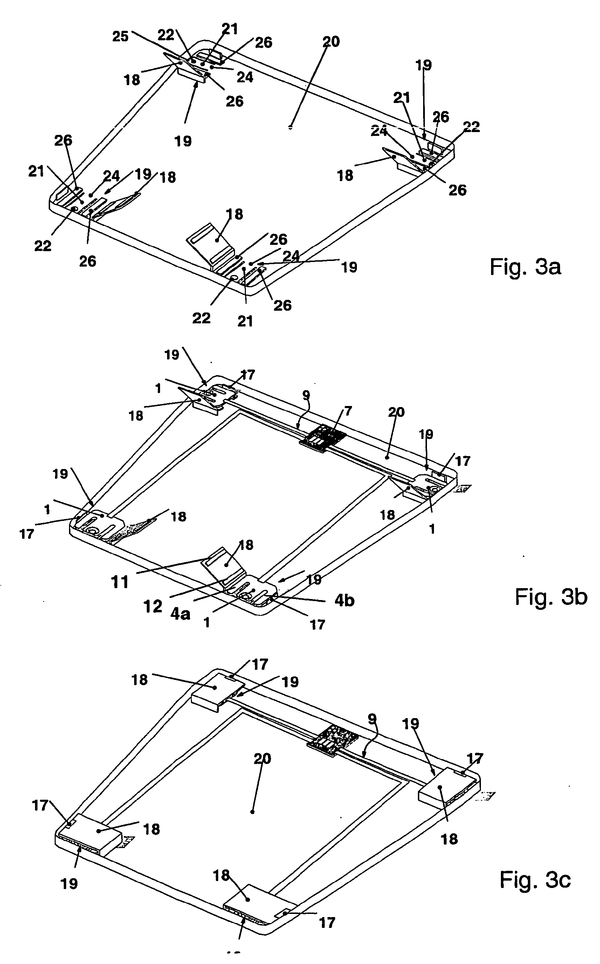

Les figures 3 à 5 montrent des exemples d'un appareil selon un premier mode de réalisation de l'invention, plus particulièrement un pèse-personne, comprenant un plateau 10 susceptible de recevoir le poids à mesurer, plateau 10 qui est supporté par un socle 20 et renferme avec ce dernier plusieurs capteurs de force 1 (figure 2).

Le capteur de force 1, tel que mieux visible à la figure 2, est réalisé à partir d'une plaque métallique plate d'une épaisseur comprise entre 1 et 5 mm, il a une forme générale en T comportant un barreau central 2. L'une des extrémités du barreau 2 est reliée à une partie de fixation 4 comportant deux bras 4a, 4b qui entourent le barreau 2 sur ses côtés, partie de fixation destinée à être encastrée dans le plateau ou dans le socle de l'appareil, alors que l'extrémité 5 opposée est libre, pouvant fléchir sous l'effet de la charge appliquée, notamment le poids P (figure 1). Le barreau 2 du capteur supporte des jauges de contrainte 3, par exemple, deux jauges montées en demi pont de Wheatstone reliées au circuit électronique de commande de l'appareil pour convertir les déformations subies par les jauges en signaux électriques, transformer ces derniers en valeurs numériques correspondant au poids mesuré et les afficher. Les jauges de contrainte 3 sont, par exemple, déposées sur la surface d'une céramique par une technique de sérigraphie, cette céramique étant ensuite reportée par collage sur le barreau 2 par une technologie dite de couche épaisse.

La figure 1 montre schématiquement en coupe un capteur de force 1 dont l'une de ses extrémités est encastrée au plateau 10, alors que l'extrémité opposée 5 reçoit le poids P à mesurer. Selon le principe général de l'invention, tel que mieux illustré à la figure 1, une lame 21 est solidaire du socle 20, lame qui présente une flexibilité dans le sens vertical, alors qu'elle est rigide dans le plan horizontal, tant latéralement que longitudinalement (dans le sens axial de la lame).

Selon un aspect avantageux de l'invention, le capteur reçoit la force de réaction au niveau du socle 20 moyennant une protubérance 22 d'application de charge. Dans une réalisation préférée de l'invention, le capteur 1 comporte une saillie 6 au niveau de son extrémité libre 5, saillie destinée à coopérer avec la protubérance 22 du socle 20. Une telle saillie 6 peut être avantageusement réalisée par emboutissage pour une épaisseur d'environ 1 mm. La saillie 6 permet de dégager un espace entre le socle 20 et le barreau 2, en plus de celui dégagé par la protubérance 22. De surcroît, le capteur étant réalisé en acier, son usure dans le temps (et implicitement celle de la saillie 6) sera quasiment nulle, assurant ainsi un appui constant, en un même point du capteur.

Selon un autre aspect avantageux de l'invention, les capteurs 1, le circuit électronique 7 et leurs câbles 8 de connexion forment un module de pesée 9. Un tel module est réalisé en alimentant une chaîne de montage, de préférence automatisée, en capteurs 1 et en circuits électroniques 7 et en réalisant les soudures au niveau des connexions des quatre capteurs 1 avec un circuit électronique 7 au niveau des extrémités des câbles 8. Un tel module de pesée 9 peut par la suite être rapidement assemblé à l'intérieur d'un appareil, tel que représenté aux figures 3 à 5 et expliqué par la suite.

Les figures 3a à 3c illustrent un appareil de pesée selon un premier mode de réalisation de l'invention où le module de pesée 9 est directement placé entre un plateau 10 et un socle 20. Selon ce premier mode de réalisation, des lames 21 sont découpées aux quatre coins du socle 20, chaque lame 21 comportant une protubérance 22 d'application de charge au capteur 1. Tel que mieux visible à la figure 3a, une lame 21 a une forme générale rectangulaire comportant une attache 24 la reliant au socle 20 et une extrémité libre 25. La protubérance 22 est réalisée dans la proximité de son extrémité libre 25. Deux surépaisseurs 26 sont réalisées de part et d'autre, parallèlement à la lame 21, sur la surface interne du socle 20 et assurent le bon placement et le bon fonctionnement des capteurs 1.

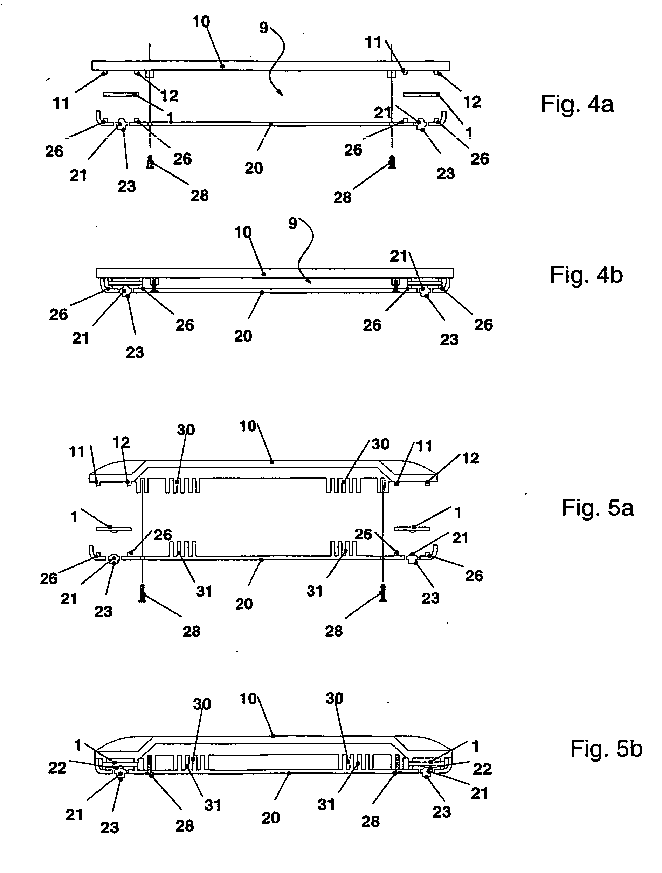

La lame 21 prend avantageusement appui sur le sol au moyen d'un bossage 23 (fig. 4a,4b et 5a, 5b) réalisé en une même pièce et un même matériau que la lame 21 ou, dans une variante le bossage 23 est un tampon en caoutchouc à propriétés antidérapantes.

La lame 21 est agencée parallèlement en dessous du barreau 2, elle a une forme rectangulaire et ses dimensions sont calculées afin de pouvoir limiter les erreurs induites par une telle liaison à lame pivotante entre le socle et le pied (appui sur le sol) de l'appareil. On peut ainsi déterminer la longueur de la lame 21 avec les formules et les hypothèses suivantes.

Soit, pour un barreau 2 travaillant en flexion, avec :

P = la charge déposée sur le pèse personne (kg)
N = le nombre de capteurs (dans ce cas, N = 4)
L = Longueur libre du corps d'épreuve (mm)
E = Le module de Young du corps d'épreuve (kg/mm2)
b = largeur de section de la poutre du corps d'épreuve (mm)
h = hauteur de section de la poutre du corps d'épreuve (mm)

Alors la flèche f (mm) en extrémité du corps d'épreuve sera donnée par la relation :

$$ f(mm) \; = \; \frac{P}{N} . \frac{L^3}{3.E.\dfrac{b.h^3}{12}} (1) $$

Soient pour la lame 21 travaillant également en flexion,

E' = Le module de Young de la lame. (kg/mm2)
L' = Longueur libre de la lame (mm)
b' = largeur de section lame (mm)
h' = Hauteur de section lame (mm)

L'erreur Err (g) générée par la lame est alors donnée par :

$$ Err(g) \; = \; f . \frac{E' b' h'^3}{4.L'^3} (2) $$

Si on souhaite que cette erreur Err soit égale à une limite maximum imposée, on obtient alors une relation qui lie la longueur libre du corps d'épreuve L à la longueur libre L' de la lame.

Si on pose *Err*(g) = *Max* alors en reportant (1) dans (2) on obtient :

$$L' = \sqrt[3]{\frac{P}{N} \cdot \frac{E'}{E} \cdot \frac{b'h'^3}{bh^3} \cdot \frac{L^3}{Max}}$$

A titre d'exemple, avec P = 160kg ; N=4 et pour un capteur en acier du type illustré à la figure 2, avec L= 16,75 mm, E=21 000 kg/mm² ; b = 14 mm ; h = 3mm, ainsi qu'en choisissant une lame en une matière plastique facile à obtenir à l'extrémité du socle par injection, on choisit : E' = 300kg/mm² ; b' = 7 mm ; h' = 1,5 mm et avec l'erreur limitée, dans le cas d'un pèse-personne à Max = 5g, on obtient alors la longueur de la lame 21, L' = 20,3 mm.

Dans une première variante du premier mode de réalisation de l'invention illustrée aux figures 3a à 3c, chaque capteur 1 est agencé sur le socle 20 à l'intérieur d'un logement 19 fermé par un volet rabattable 18 moyennant un crochet 17. La surface interne du volet 18 comporte des surépaisseurs 11,12 prenant appui sur les bras 4a, 4b du capteur 1. Lors du montage (fig. 3b), un module de pesée 9 est placé sur le socle 20, chaque capteur 1 prenant place dans un logement 19, ses bras 4a, 4b reposant sur des surépaisseurs 26 et l'extrémité libre 5 du barreau 2 sur la protubérance 22 à l'extrémité libre 25 d'une lame 21. Une fois les volets rabattables 18 refermés (fig.3c), les surépaisseurs 11,12 forment contre-appuis en venant au contact des surfaces supérieures des bras 4a, 4b des capteurs 1. La structure ainsi constituée peut recevoir une plaque rigide prenant appui sur la surface supérieure des volets rabattables. La géométrie et le matériau d'une telle plaque sont choisis de manière à pouvoir supporter le poids à peser. Une telle plaque pourrait être un plateau nervuré en une matière plastique, une plaque de verre, de bois, de métal, etc.

Dans une deuxième variante simplifiée du premier mode de réalisation de l'invention, mieux visible aux figures 4a et 4b, les capteurs 1 d'un module de pesée 9 sont directement pris en sandwich entre les surépaisseurs 11,12 d'un plateau rigide et celles 26 d'un socle 20, l'assemblage du plateau et du socle se faisant à l'aide des vis 28, comme représenté, voire par collage.

Dans une troisième variante du premier mode de réalisation de l'invention, mieux visible aux figures 5a et 5b, le plateau 10 et le socle 20 sont réalisés en une matière plastique, par exemple de l'ABS, mais en étant munis chacun de nervures permettant de rigidifier leur structure. Ainsi, le plateau 10 comporte, à au moins deux emplacements de sa surface interne, des nervures 30 venant au contact de contre nervures 31 de la surface interne du socle 20. Une telle construction permet de garantir une bonne rigidité de l'ensemble, tout en étant réalisée de manière très économique, par une technique d'injection de matière plastique. L'assemblage du plateau et du socle peut se faire à l'aide des vis 28 de fixation ou par simple emboîtement en utilisant des crochets de fixation.

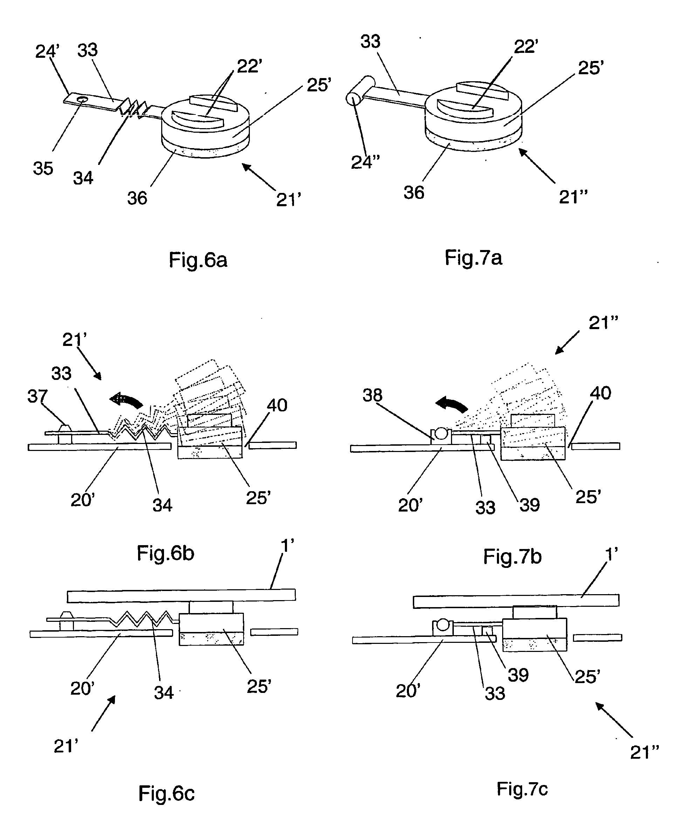

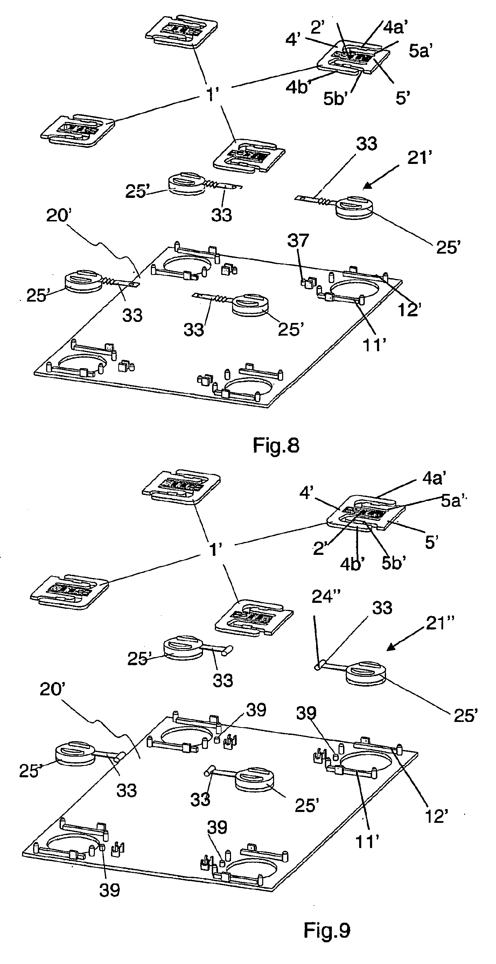

Les figures 6 à 11 montrent des exemples d'un appareil selon un deuxième mode de réalisation de l'invention, plus particulièrement une balance de ménage, comprenant un plateau (non représenté aux figures) susceptible de recevoir le poids à mesurer, plateau qui est supporté par un socle 20' et renferme avec ce dernier plusieurs capteurs de force 1' (figures 8 à 11).

Le capteur de force 1', tel que mieux visible aux figures 8 et 9, est réalisé à partir d'une plaque métallique plate d'une épaisseur comprise entre 1 et 5 mm, il comporte un barreau central 2' dont les extrémités sont reliées chacune à une pièce en U, les pièces en U se faisant face. Plus particulièrement, l'une des extrémités du barreau 2' est reliée à une partie de fixation 4' comportant deux bras 4a', 4b' qui entourent le barreau 2' sur ses côtés, partie de fixation destinée à être encastrée dans le plateau de l'appareil, alors que l'extrémité opposée 5' comporte, elle deux bras 5a', 5b' libres pouvant fléchir sous l'effet du poids appliqué. Le barreau 2' du capteur supporte des jauges de contrainte 3', par exemple, deux jauges montées en demi pont de Wheatstone reliées au circuit électronique de commande de l'appareil pour convertir les déformations subies par les jauges en signaux électriques, transformer ces derniers en valeurs numériques correspondant au poids mesuré et les afficher.

L'appareil selon ce deuxième mode de réalisation comporte des ensembles formant lame 21' et 21" réalisés de manière à offrir plus de souplesse à la liaison existante entre le pied d'application de force au niveau de la lame et le socle de l'appareil.

Ainsi, la figure 6a illustre un ensemble formant lame 21' selon une première variante de réalisation de ce deuxième mode. L'ensemble formant lame 21' comporte une languette 33 dont une extrémité 24' comporte un orifice 35 de fixation au socle 20', tel qu'il sera expliqué par la suite. La languette 33 se prolonge vers son autre extrémité 25' par une partie réalisée sous forme de soufflet 34. Cette partie de soufflet peut être réalisée en une seule pièce avec la languette 33, par exemple en une matière plastique du type ABS ou PS. L'extrémité libre 25' a une forme générale cylindrique et forme un pied d'appui sur le sol de l'appareil. Ce pied est de préférence réalisé en une seule pièce avec la languette 33, par exemple en une matière plastique par une technique d'injection. La face supérieure de l'extrémité 25' comporte deux protubérances 22' réalisées sous forme de deux nervures parallèles venant s'appliquer sur les bras parallèles 5a', 5b' du capteur 1'. La face inférieure de l'extrémité 25' comporte un patin 36 en élastomère pour éviter les glissements de l'appareil sur le sol. La figure 6b illustre l'ensemble formant lame 21' monté sur le socle 20' moyennant une bouterolle 37, l'extrémité 25' traversant un orifice 40 pratiqué dans la surface du socle 20'.

Sur cette même figure, on a représenté en pointillé la position fléchie de l'ensemble lame 21' où l'on note que le soufflet 34 s'était déformé dans le sens de la flèche sous l'influence de la charge que l'extrémité 25' transmet alors intégralement au capteur 1' (fig. 6c).

La figure 7a illustre un ensemble formant lame 21" selon une deuxième variante de réalisation du deuxième mode de l'invention. L'ensemble formant lame 21" comporte une languette 33 dont l'extrémité 24" est réalisée sous forme d'une goupille cylindrique horizontale par laquelle elle sera reliée au socle 20', tel qu'il sera expliqué par la suite. L'autre extrémité 25' de la languette 33 a une forme générale cylindrique et forme un pied d'appui sur le sol de l'appareil. Ce pied est de préférence réalisé en une seule pièce avec la languette 33, par exemple en une matière plastique par une technique d'injection. La face supérieure de l'extrémité 25' comporte deux protubérances 22' réalisées sous forme de deux nervures parallèles venant s'appliquer sur les bras parallèles 5a', 5b' du capteur 1'. La face inférieure de l'extrémité 25' comporte un patin 36 en élastomère pour éviter les glissements de l'appareil sur le sol. La figure 7b illustre l'ensemble formant lame 21" monté sur le socle 20', la goupille 24" venant se clipper dans une charnière 38 du socle 20', l'extrémité 25' traversant un orifice 40 pratiqué dans la surface du socle 20'. Sur cette même figure, on a représenté en pointillé la position pivotée de l'ensemble lame 21" où l'on note que la languette 33 a tourné dans le sens de la flèche sous l'influence de la charge que l'extrémité 25' transmet alors intégralement au capteur 1' (fig. 7c). Un appui 39 réalisé sur la face interne du socle 20' permet d'éviter à la languette 33 de pivoter vers le bas, maintenant ainsi le pied en bonne position dans le socle, même si l'appareil est soulevé par l'utilisateur.

La figure 8 illustre un éclaté des différents composants de l'appareil selon la première variante du deuxième mode de l'invention, où les ensembles formant lame 21' sont fixés moyennant les bouterolles 37 au socle 20'. Les capteurs 1' sont seulement placés par-dessus, leurs bras 4a', 4b' venant en simple appui sur des surépaisseurs 11',12'.

La figure 9 illustre un éclaté des différents composants de l'appareil selon la deuxième variante du deuxième mode de l'invention, où les ensembles formant lame 21" sont montés à pivotement dans les charnières 38 du socle 20'. Les capteurs 1' sont seulement placés par-dessus, leurs bras 4a', 4b' venant en simple appui sur des surépaisseurs 11',12'.

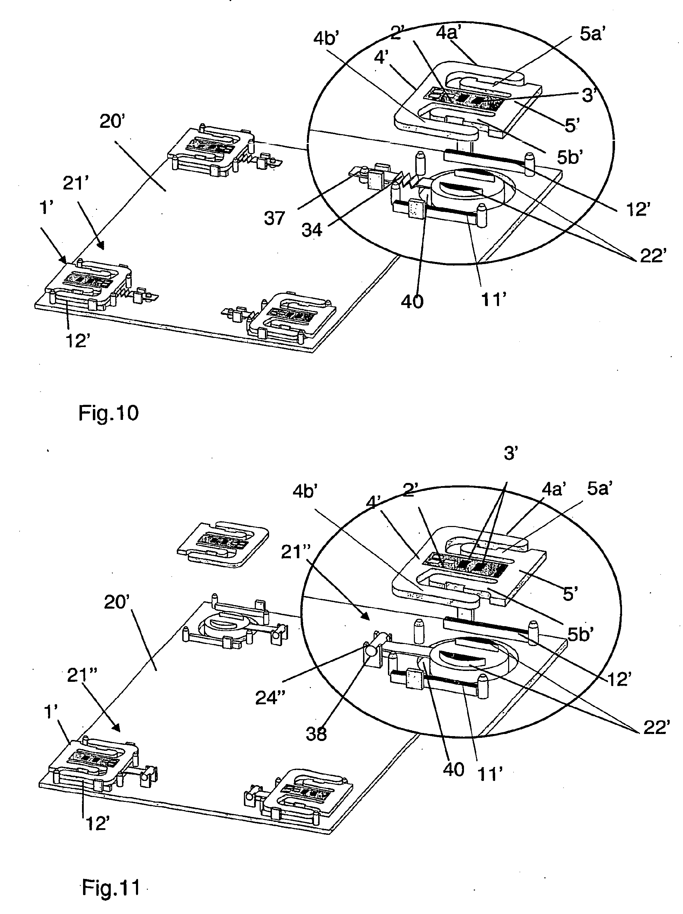

Les figures 10 et 11 montrent le socle 20' assemblé avec les capteurs 1' au contact des lames de l'invention, mais où le détail à échelle agrandie de chaque figure illustre le capteur 1' avant son placement sur l'ensemble formant lame 21' (fig. 10), respectivement 21" (fig.11). Une fois l'assemblage réalisé, un plateau de pesée sera posé sur l'empilement des composants, par exemple en le fixant par des vis dans le socle 20'. Le plateau de pesée bloque alors définitivement les capteurs 1' au niveau de leurs bras extérieurs 4a', 4b', laissant libre le barreau 2', ainsi que les bras intérieurs 5a', 5b'.

D'autres variantes et modes de réalisation de l'invention peuvent être envisagés sans sortir du cadre de ces revendications. Dans tous les cas, la rigidité de le lame dans le plan du socle fait que la protubérance et le bossage appliquent la force dans le sens de la flexibilité de la lame.

Ainsi, les capteurs 1 illustrés aux figures 2 à 5 peuvent être utilisés avec les solutions présentées aux figures 6 à 11 en lieu et place des capteurs 1'.

## Revendications

1. Appareil électronique de pesée comportant un plateau (10) de réception de charge et un socle (20,20'), ainsi qu'au moins trois capteurs (1,1') de force essentiellement plats, supportant le plateau (10) et comportant des jauges de contrainte (3,3') pour générer un signal électrique correspondant à la charge appliquée, les capteurs (1,1') étant directement montés entre le plateau (10) et le socle (20,20'), le plateau (10) et/ou le socle (20,20'), intégrant des moyens d'orientation des capteurs (1,1'), **caractérisé en ce qu'**il comprend, en dessous de chaque capteur, une lame (21,21',21") comportant une attache (24,24',24") la reliant au socle et une extrémité libre (25,25') portant une protubérance (22,22') d'application de charge au capteur (1,1') ainsi qu'un bossage (23,36) destiné à prendre appui sur le sol.

2. Appareil selon la revendication 1, **caractérisé en ce que** le capteur (1,1') a une forme générale en T, comportant au centre un barreau (2,2') déformable portant les jauges de contrainte (3,3') et que la lame (21,21',21 ") a une forme générale rectangulaire et est parallèle au barreau (2,2').

3. Appareil selon l'une des revendications précédentes, **caractérisé en ce que** la lame (21) est réalisée en une seule pièce avec le socle (20).

4. Appareil selon l'une des revendications 1 à 3, **caractérisé en ce que** la lame (21',21 ") est rapportée sur la surface interne du socle (20').

5. Appareil selon la revendication 4, **caractérisé en ce que** la lame (21') comporte une attache (24') de fixation au socle et est reliée à l'extrémité libre (25') par un soufflet (34).

6. Appareil selon la revendication 4, **caractérisé en ce que** la lame (21 ") est montée pivotante autour de son attache (24") au socle (20').

7. Appareil selon l'une des revendication précédentes, **caractérisé en ce que** ledit capteur (1) a une forme générale en T, comportant au centre un barreau (2) déformable portant les jauges de contrainte (3), la protubérance (22) d'application de la charge prenant appui à l'extrémité libre (5) du barreau (2).

8. Appareil selon l'une des revendications 1 à 6, **caractérisé en ce que** ledit capteur (1') comprend un barreau (2') central déformable, portant les jauges de contrainte (3'), chacune de ses extrémités étant reliée à une pièce en U, les deux pièces en U d'extrémité se faisant face, la lame (21') comportant deux protubérances (22') prenant chacune appui sur l'un des bras d'une extrémité en U.

9. Appareil selon l'une des revendications précédentes, **caractérisé en ce que** ledit barreau (2) comprend une saillie (6) à son extrémité libre (5) coopérant avec la protubérance (22) d'application de charge.

10. Appareil selon l'une des revendications précédentes, **caractérisé en ce que** le plateau (10) et/ou le socle (20, 20') comportent des surépaisseurs (11,12; 26, 11',12') prenant appui sur le pourtour du capteur.

11. Appareil selon l'une des revendications précédentes, **caractérisé en ce que** les capteurs (1) sont montés au plateau (10) ou au socle (20) en utilisant des moyens de fixation à enclenchement direct.

12. Appareil selon l'une des revendications précédentes, **caractérisé en ce que** les capteurs (1,1'), le circuit électronique (7) de l'appareil et leurs câbles (8) de connexion électrique sont reliés ensemble et forment un module de pesée (9) directement monté entre le plateau et le socle.

13. Appareil selon l'une des revendications précédentes, **caractérisé en ce que** ledit plateau (10) et/ou ledit socle (20,20') sont réalisés en une matière plastique par une technique d'injection.

14. Appareil selon la revendication 13, **caractérisé en ce que** le plateau (10) comporte des nervures(30) internes coopérant avec des contre nervures (31) internes du socle pour rigidifier l'ensemble.

15. Appareil selon la revendication 13, **caractérisé en ce que** chaque capteur (1) est fixé au socle (20) moyennant un volet rabattable (18).

16. Appareil selon l'une des revendications 13 ou 14, **caractérisé en ce que** le plateau (10) est une plaque rigide d'application de charge.

**Patentansprüche**

1. Elektronische Wiegevorrichtung mit einer Platte (10) zur Lastaufnahme und einem Sockel (20, 20') sowie mindestens drei im Wesentlichen ebenen Kraftmesszellen (1, 1'), die die Platte (10) tragen und Dehnungsmessstreifen (3, 3') zur Erzeugung eines elektrischen Signals umfassen, das der aufgebrachten Last entspricht, wobei die Messzellen (1, 1') direkt zwischen der Platte (10) und dem Sockel (20, 20') montiert sind und wobei die Platte (10) und/oder der Sockel (20, 20') Mittel zur Ausrichtung der Messzellen (1, 1') umfassen, **dadurch gekennzeichnet, dass** sie unter jeder Messzelle eine Lamelle (21, 21', 21") umfasst, die ein Befestigungselement (24, 24', 24"), das sie mit dem Sockel verbindet, und ein freies Ende (25, 25') aufweist, das eine Erhöhung (22, 22') zum Aufbringen der Last auf die Messzelle (1, 1') sowie eine Erhebung (23, 36) trägt, die dazu bestimmt ist, sich auf dem Boden abzustützen.

2. Vorrichtung nach Anspruch 1, **dadurch gekennzeichnet, dass** die Messzelle (1, 1') im Allgemeinen T-förmig ist und in der Mitte einen verformbaren Stab (2, 2') aufweist, der die Dehnungsmessstreifen (3, 3') trägt, und dass die Lamelle (21, 21', 21") eine im Allgemeinen rechteckige Form aufweist und parallel zu dem Stab (2, 2') verläuft.

3. Vorrichtung nach einem der vorhergehenden Ansprüche, **dadurch gekennzeichnet, dass** die Lamelle (21) in einem Stück mit dem Sockel (20) ausgeführt ist.

4. Vorrichtung nach einem der Ansprüche 1 bis 3, **dadurch gekennzeichnet, dass** die Lamelle (21', 21") an der Innenfläche des Sockels (20') angebracht ist.

5. Vorrichtung nach Anspruch 4, **dadurch gekennzeichnet, dass** die Lamelle (21') ein Element (24') zur Befestigung am Sockel umfasst und mit dem freien Ende (25') durch einen Faltenbalg (34) verbunden ist.

6. Vorrichtung nach Anspruch 4, **dadurch gekennzeichnet, dass** die Lamelle (21") um ihr Befestigungselement (24") schwenkbar am Sockel (20') montiert ist.

7. Vorrichtung nach einem der vorhergehenden Ansprüche, **dadurch gekennzeichnet, dass** die genannte Messzelle (1) im Allgemeinen T-förmig ist und in der Mitte einen verformbaren Stab (2) umfasst, der die Dehnungsmessstreifen (3) trägt, wobei sich die Erhöhung (22) zum Aufbringen der Last auf dem freien Ende (5) des Stabes (2) abstützt.

8. Vorrichtung nach einem der Ansprüche 1 bis 6, **da-**

**durch gekennzeichnet, dass** die genannte Messzelle (1') einen in der Mitte befindlichen, verformbaren Stab (2') umfasst, der die Dehnungsmessstreifen (3') trägt, wobei jedes seiner Enden mit einem U-förmigen Teil verbunden ist, sich die beiden U-förmigen Endstücke gegenüberliegen und die Lamelle (21') zwei Erhöhungen (22') umfasst, die sich jeweils auf einem der Schenkel eines U-förmigen Endes abstützen.

9. Vorrichtung nach einem der vorhergehenden Ansprüche, **dadurch gekennzeichnet, dass** der genannte Stab (2) an seinem freien Ende (5) einen Vorsprung (6) umfasst, der mit der Erhöhung (22) zum Aufbringen der Last zusammenwirkt.

10. Vorrichtung nach einem der vorhergehenden Ansprüche, **dadurch gekennzeichnet, dass** die Platte (10) und/oder der Sockel (20, 20') Überhöhungen (11, 12; 26, 11', 12') umfassen, die sich auf dem Umfang der Messzelle abstützen.

11. Vorrichtung nach einem der vorhergehenden Ansprüche, **dadurch gekennzeichnet, dass** die Messzellen (1) an der Platte (10) oder am Sockel (20) unter Verwendung von unmittelbar eingreifenden Befestigungsmitteln montiert sind.

12. Vorrichtung nach einem der vorhergehenden Ansprüche, **dadurch gekennzeichnet, dass** die Messzellen (1, 1'), die elektronische Schaltung (7) der Vorrichtung und ihre elektrischen Anschlusskabel (8) miteinander verbunden sind und ein Wiegemodul (9) bilden, das direkt zwischen der Platte und dem Sockel montiert ist.

13. Vorrichtung nach einem der vorhergehenden Ansprüche, **dadurch gekennzeichnet, dass** die genannte Platte (10) und/oder der genannte Sockel (20, 20') aus Kunststoff durch ein Spritzgießverfahren ausgeführt sind.

14. Vorrichtung nach Anspruch 13, **dadurch gekennzeichnet, dass** die Platte (10) innen liegende Rippen (30) aufweist, die mit gegenüberliegenden innen liegenden Rippen (31) des Sockels zusammenwirken, um das Ganze zu versteifen.

15. Vorrichtung nach Anspruch 13, **dadurch gekennzeichnet, dass** jede Messzelle (1) am Sockel (20) befestigt ist, so dass ein umklappbarer Flügel (18) gebildet wird.

16. Vorrichtung nach einem der Ansprüche 13 oder 14, **dadurch gekennzeichnet, dass** die Platte (10) eine steife Platte zum Aufbringen der Last ist.

**Claims**

1. Electronic weighing appliance comprising a load-receiving platform (10) and a base (20,20') as well as at least three substantially flat force sensors (1,1') supporting the platform (10) and comprising strain gauges (3,3') for generating an electrical signal corresponding to the load applied, the sensors (1,1') being directly mounted between the platform (10) and the base (20,20'), the platform (10) and/or the base (20,20') including means for directing the sensors (1,1'), **characterised in that** it comprises, under each sensor, a blade (21,21',21") having a fastener (24,24',24") connecting it to the base and a free end (25,25') with a protuberance (22,22') for applying load to the sensor (1,1') and a boss (23,36) designed to rest on the floor.

2. Appliance according to claim 1, **characterised in that** the sensor (1,1') has a generally T shape, comprising a deformable bar (2,2') at the centre supporting the strain gauges (3,3') and **in that** the blade (21,21',21") has a generally rectangular shape and is parallel to the bar (2,2').

3. Appliance according to one of the preceding claims, **characterised in that** the blade (21) is constructed in one piece with the base (20).

4. Appliance according to one of claims 1 to 3, **characterised in that** the blade (21',21 ") is attached to the inner surface of the base (20').

5. Appliance according to claim 4, **characterised in that** the blade (21') comprises a fastener (24') for fixing to the base and is connected to the free end (25') by a bellows (34).

6. Appliance according to claim 4, **characterised in that** the blade (21") is mounted so that it can pivot about its fastener (24") to the base (20').

7. Appliance according to one of the preceding claims, **characterised in that** said sensor (1) has a generally T shape, comprising a deformable bar (2) at the centre supporting the strain gauges (3), the load application protuberance (22) resting on the free end (5) of the bar (2).

8. Appliance according to one of claims 1 to 6, **characterised in that** said sensor (1') comprises a central deformable bar (2') supporting the strain gauges (3'), each of its ends being connected to a U-shaped part, the two U-shaped end parts facing each other, the blade (21') comprising two protuberances (22') each resting on one of the arms of a U-shaped end.

9. Appliance according to one of the preceding claims, **characterised in that** said bar (2) comprises a projection (6) at its free end (5) cooperating with the load application protuberance (22).

10. Appliance according to one of the preceding claims, **characterised in that** the platform (10) and/or the base (20,20') comprise reinforcements (11,12; 26,11',12') resting on the outside of the sensor.

11. Appliance according to one of the preceding claims, **characterised in that** the sensors (1) are mounted on the platform (10) or the base (20) using direct engagement fastening means.

12. Appliance according to one of the preceding claims, **characterised in that** the sensors (1,1'), the electronic circuit (7) of the appliance and their electrical connection cables (8) are connected together and form a weighing module (9) directly mounted between the platform and the base.

13. Appliance according to one of the preceding claims, **characterised in that** said platform (10) and/or said base (20,20') are made from plastic using an injection technique.

14. Appliance according to claim 13, **characterised in that** the platform (10) comprises internal ribs (30) cooperating with internal counter-ribs (31) on the base to stiffen the assembly.

15. Appliance according to claim 13, **characterised in that** each sensor (1) is fixed to the base (20) by means of a folding flap (18).

16. Appliance according to claim 13 or 14, **characterised in that** the platform (10) is a rigid load application plate.

Fig. 1

Fig. 2

Fig. 3a

Fig. 3b

Fig. 3c

13

Fig. 4a

Fig. 4b

Fig. 5a

Fig. 5b

14

Fig.6a

Fig.7a

Fig.6b

Fig.7b

Fig.6c

Fig.7c

Fig.8

Fig.9

Fig.10

Fig.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9109286 A
- US 5929391 A
- EP 0984251 A
- US 5510581 A